# EUROPEAN PATENT APPLICATION

(11) **EP 4 641 379 A1**
(43) Date of publication of application: **29.10.2025**
(21) Application number: 25172725.1
(22) Date of filing: 25.04.2025
(51) Int. Cl.: G06F 9/46, G06F 21/62, G06F 16/29

(54) **GEOGRAPHIC INFORMATION SYSTEM DATA PLATFORM**

(30) Priority: 26.04.2024 IN 202411033480; 01.11.2024 IN 202411083721
(71) Applicant: Services Pétroliers Schlumberger, 75007 Paris (FR); GeoQuest Systems B.V., 2514 JG The Hague (NL)
(72) Inventor: SETH, Surendra, 411006 Pune (IN); DAVE, Ankesh, 411006 Pune (IN)
(74) Representative: Schlumberger Intellectual Property Department

(57) **Abstract**

A method implements a geographic information system data platform. The method includes provisioning a domain account, corresponding to a domain application, as one of a set of domain accounts to a map server to process a set of domain application requests from a set of domain applications including the domain application. The method further includes controlling access to the domain accounts based on a user role configuration. The method further includes mapping a domain application request from the domain application to the domain account on the map server based on a user role configuration. The method further includes securing access to a data partition within the domain account using a data partition entitlement for the request.

## Description

### CROSS REFERENCE TO RELATED APPLICATION

This application claims the benefit of India Provisional Patent Application Number 202411033480, filed with the India Patent Office on April 26, 2024 and India provisional Patent Application 202411083721 filed with the India Patent Office on November 1, 2024, which are both hereby incorporated by reference herein.

### BACKGROUND

Map services exposed through web applications and platforms allow users to create and share interactive maps utilizing large datasets. Map services may handle millions of data points efficiently to visualize and analyze large amounts of geospatial data. A challenge is to efficiently expose map services to other applications and efficiently manage the deployment and provisioning of map servers and data partitions of geospatial data.

### SUMMARY

In general, in one or more aspects, the disclosure relates to a method implementing a geographic information system data platform. The method includes provisioning a domain account, corresponding to a domain application, as one of a set of domain accounts to a map server to process a set of domain application requests from a set of domain applications including the domain application. The method further includes controlling access to the domain accounts based on a user role configuration. The method further includes mapping a domain application request from the domain application to the domain account on the map server based on a user role configuration. The method further includes securing access to a data partition within the domain account using a data partition entitlement for the request.

Other aspects of one or more embodiments may be apparent from the following description and the appended claims.

### BRIEF DESCRIPTION OF DRAWINGS

FIG. 1 shows a diagram in accordance with one or more embodiments of the disclosure.
FIG. 2, FIG. 3, and FIG. 4 show flowcharts in accordance with one or more embodiments of the disclosure.
FIG. 5, FIG. 6, FIG. 7, FIG. 8, FIG. 9, FIG. 10, FIG. 11, and FIG. 12 show examples in accordance with one or more embodiments of the disclosure.
FIG. 13.1 and FIG. 13.2 show computing systems in accordance with one or more embodiments.

Similar elements in the various figures are denoted by similar names and reference numerals. The features and elements described in one figure may extend to similarly named features and elements in different figures.

### DETAILED DESCRIPTION

Embodiments of the disclosure expose and provision map services to applications. The map services may be exposed through a geospatial service that provides an application programming interface that may be utilized by domain applications. Domain applications generate domain application requests that are processed by the geospatial service into geospatial service requests that are handled by the map services. The map services provide map service responses that include map tiles to visualize the geospatial data. The map service responses are processed to generate geospatial service responses with the map tiles that are provided back to the domain application. The map tiles may be displayed by the domain application to a user.

Embodiments of the disclosure may manage the deployment and provisioning of map servers to host multi-tenant data using a set of domain accounts. Each map server may host multiple domain accounts to process requests, generate map tiles, and provide responses.

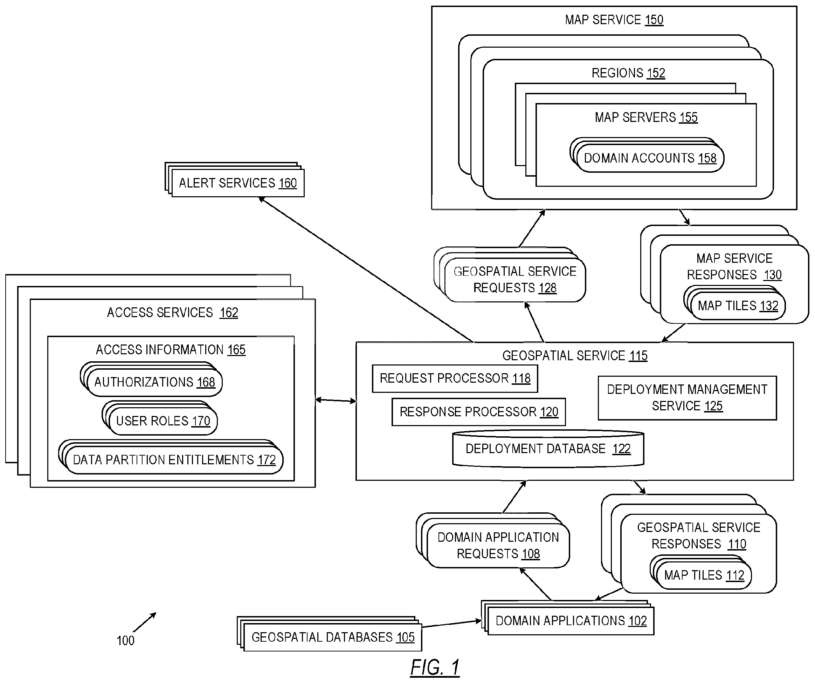

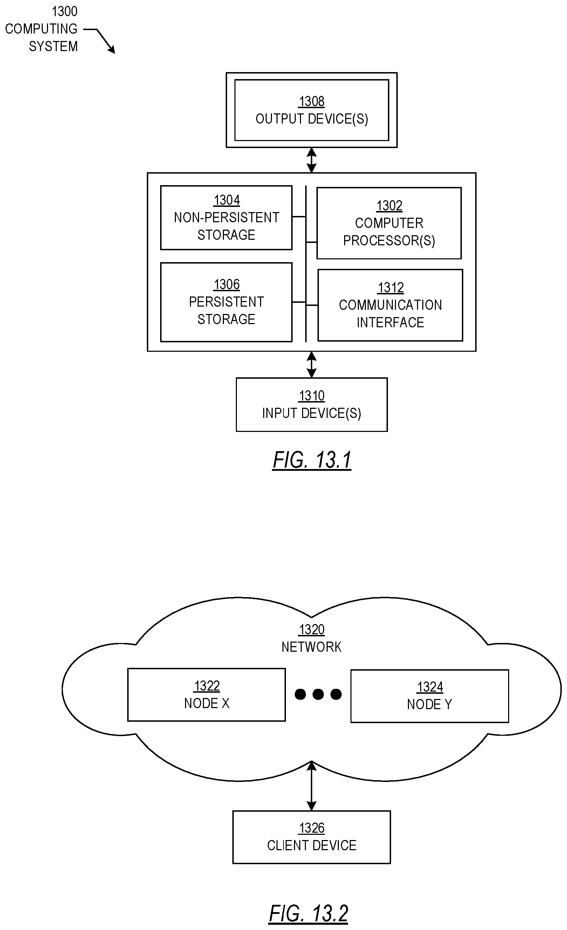

Turning to FIG. 1, the system (100) is a computing system with components shown in accordance with one or more embodiments. The system (100) and corresponding components may utilize the computing systems described in FIG. 13.1 and FIG. 13.2 to expose and provision map services to applications. The system (100) includes the domain applications (102), the geospatial databases (105), the geospatial service (115), the map service (150), the alert services (160), and the access services (162).

The domain applications (102) are collections of data with instructions that form programs executed by the components of the system (100). In an embodiment, the domain applications (102) may execute on one or more computing systems operated by users of the system (100). In an embodiment, a domain application may be a web application executing at least partially on a computer system of the user (*e.g.,* a desktop computer, a smartphone, *etc.*)*.* In an embodiment, the domain applications (102) may be distributed to and execute on a browser application of the computing system of the user. The domain applications (102) generate and transmit the domain application requests (108) that use the geospatial databases (105). The domain applications (102) receive the geospatial service responses (110) that are responsive to the domain application requests (108).

In an embodiment, a domain application (of the domain applications (102)) is a software application that is designed to serve a particular domain. In an embodiment, a domain of a domain application identifies an area of subject matter that the application is designed to address. The domain may define the scope within which the application operates and the problems to solve. For example, in the oil and gas exploration, a domain application may focus on well head data collection and management, analysis, and prediction. A domain application may be designed to address the requirements of a certain set of principles. A domain application may be built with a domain-driven design approach to model and reflect the domain in the code of the domain application. The domain applications (102) may streamline operations within a domain to reduce resource costs (compute time, memory, processor count, *etc.*) and improve efficiency. For example, the domain applications (102) may include applications for the domains of data discovery, wellbore modelling, computational flow dynamics, flow modeling, development modeling, *etc.*

The geospatial databases (105) include hardware and software components that store, process, and communicate collections of data. The collections of data may include instructions that form programs for storing and processing geospatial data. Geospatial data refers to data that has a geographic component, such as a location or a boundary. The geospatial data may include spatial relationships and be represented by coordinates (*e.g.,* longitude, latitude, altitude, *etc.*), by geometric shapes (*e.g.,* a point, line, polygon, *etc.*), *etc.* Geospatial data may relate the geographic component to one or more corresponding attributes of the region specified by the geographic component. The geospatial databases (105) may be optimized for storing and querying large amounts of spatial data and support spatial indexing, spatial querying, spatial analysis, *etc.* Spatial indexing is the indexing of geospatial data using spatially defined values. Spatial indexing allows for efficient querying of geospatial data by creating an index on the spatial columns of the data to quickly locate and retrieve the relevant data. In an embodiment, the geospatial databases (105) may be part of an open subsurface data universe (OSDU) data platform that provides subsurface and geospatial data.

The domain application requests (108) are requests made from the domain applications (102) to the geospatial service (115). In an embodiment, one of the domain application requests (108) may be transmitted to a server-side application, a web service, a representational state transfer application programming interface (RESTful API), *etc.* The domain application requests (108) may reference the geospatial data within the geospatial databases (105). As an example, a request may be to render the geospatial data into a map tile, such as one of the map tiles (112) of the geospatial service responses (110).

The geospatial service responses (110) are responses that include data or information related to geospatial data or information, which may be for a specific location or region. The geospatial service responses (110) may include coordinates (latitude, longitude, altitude, *etc.*) for certain locations; address information (street name, city, state, zip code, *etc.*); map tiles or imagery (*e.g.,* the map tiles (112)); geometric shapes (points, lines, polygons, *etc.)* that may represent features such as roads, buildings, wells, natural boundaries, *etc*.; spatial analysis results (*e.g.,* proximities to landmarks, distances to locations, *etc.*); location-based metadata (*e.g.,* altitude, accuracy, timestamps, *etc*.)*.* The geospatial service responses (110) may be formatted as script object notation (*e.g*., JavaScript object notation (JSON)), extensible markup language (XML), geographical JSON (GeoJSON), *etc.,* and may be delivered through different protocols, including hypertext transfer protocol (HTTP), HTTP secure (HTTPS), WebSocket, *etc.*

The map tiles (112) may be pre-rendered images of a map that are delivered to the domain applications (102) in the geospatial service responses (110). The map tiles (112) may be used to display maps on the domain applications (102) for the users to visualize the geospatial data from the geospatial databases (105). Formats used by the map tiles (112) may include portable network graphics (PNG) (a lossy or lossless format), joint photographic experts group (JPEG) (lossy formats), web picture (WebP), mapbox vector tiles (MVT) (uses a vector format), *etc.*

The map tiles (112) may be copies of the map tiles (132) that are generated by the map service (150) using a process of tile rendering. Tile rendering involves rendering the geospatial data into a series of images, each of which covers a specific geographic area. The map tiles (112) may be delivered to the domain applications (102) with metadata that defines how the map tiles (112) may be assembled into a complete map.

The geospatial service (115) is a collection of hardware and software components that form a software application designed to support the domain applications (102) in processing geospatial data from the geospatial databases (105) to render maps using the map service (150). The geospatial service (115) may also provision and manage the utilization of the map service (150). The geospatial service (115) may execute as a web application on multiple servers within the system (100). The geospatial service (115) may include the request processor (118), the response processor (120), the deployment database (122), and the deployment management service (125).

The geospatial service (115) may provide several functionalities that may each be provided using one or more programs. The functionalities may include server management, domain account management, domain user telemetry and monitoring, cost monitoring, data access control, server health monitoring, *etc.* Server management may include the management of the map servers (155). Domain account management may include the management of the domain accounts (158) on the map servers (155) in the regions (152) within the map service (150). Domain user telemetry and monitoring may include monitoring the telemetry of the users operating the domain applications (102). Cost monitoring may include monitoring the resource usage of the map servers (155) in the map service (150). Data access control may be done using the data partition entitlements (172) to ensure users of the domain applications (102) access the proper domain accounts (158). Server health monitoring may involve monitoring the health (*e.g.,* the load) of the map servers (155), adding and removing servers, shuffling the domain accounts (158) between different map servers (155), *etc.*

The request processor (118) is an application that is a component of the geospatial service (115). In an embodiment, the request processor (118) processes the domain application requests (108) to generate the geospatial service requests (128).

The geospatial service requests (128) are requests made from the geospatial service (115) to the map service (150). The geospatial service requests (128) may be generated in response to the domain application requests (108). In an embodiment, one of the geospatial service requests (128) corresponds to one of the domain application requests (108).

The response processor (120) is an application that is a component of the geospatial service (115). In an embodiment, the response processor (120) processes the map service responses (130) to generate the geospatial service responses (110).

The deployment database (122) is a database that stores and maintains deployment information for the system (100). For example, the deployment database (122) may include information that identifies the deployment and provisioning of the map servers (155), the locations of the domain accounts (158) on the map servers (155), *etc.*

The deployment management service (125) is a service that manages the deployment of the map servers (155). The deployment management service (125) stores and uses information within the deployment database (122) to monitor and track the map servers (155) and the domain accounts (158). The deployment management service (125) may also track the compute load of the map service (155) to balance the load of compute resources utilized between the map servers (155) and to add or remove instances of the map servers (155).

The map service (150) is a software application that provides geospatial data, such as maps, satellite imagery, and GPS data, to other applications or services, such as to the domain applications (102) through the geospatial service (115). The map service (150) may provide a set of application programming interfaces (APIs) that allow the applications and services to interact with the map data, such as retrieving maps, searching for locations, calculating directions, generating map tiles, *etc.* The APIs may use standard protocols, such as representational state transfer (REST), simple object access protocol (SOAP), *etc.,* to integrate information from the map service (150) with the domain applications (102).

The regions (152) are areas where the map servers (155) may be instantiated. The regions (152) may correspond to geographic regions such as counties, cities, states, continents, *etc.* Each of the regions (152) may host multiple map servers (155).

The map servers (155) are the hardware components that execute the programs and applications that form the map service (150). The map servers (155) include memory and processors to store and execute programs to perform the operations of the map service (150). The map servers (155) host the domain accounts (158).

The domain accounts (158) are accounts hosted by the map servers (155). The domain accounts (158) include geospatial data ingested from the geospatial databases (105) that is used to render the map tiles (132). Data in the domain accounts (158) may correspond to the data partition entitlements (172). The data partition entitlements (172) may be used to prevent certain data from being accessed by certain users of the system (100).

The map service responses (130) are responses generated by the map service (150) in response to the geospatial service requests (128). The map service responses (130) include the information (*e*.*g*., the map tiles (132)) that is encapsulated in the geospatial service responses (110) for the domain applications (102). One of the map service responses (130) may include multiple map tiles (132).

The map tiles (132) are the tiles in the map service responses (130). The map tiles (132) include geospatial information that may be assembled for a map. In an embodiment, the map may include a visual representation of a geographic area. The map tiles (132) may be rendered from data from the geospatial databases (105) ingested into one of the map servers (155) in one of the domain accounts (158). In an embodiment, the map tiles (132) may be copied into the geospatial service responses (110) to generate the map tiles (112).

The alert services (160) are software applications that monitor and visualize data from applications, servers, databases, *etc.,* to detect and alert on potential issues or anomalies. The alert services (160) may generate and send alerts to notify operators of the system (100) of issues or unusual behavior in real-time. In an embodiment, functionality provided by the alert services (160) may include collecting and storing time-series data from multiple sources used by alert managers and rules to provide alerts. In an embodiment, the alert services (160) may include a data visualization platform to provide interactive dashboards, charts, and graphs from multiple data sources. The alert services (160) may generate and transmit alerts to users of the system (100) responsive to multiple usage thresholds for utilization of the applications, services, servers, *etc.,* of the system (100).

The access services (162) are software systems that manage and control access to resources, data, and applications across and within the system (100). The access services (162) utilize the authorizations (168), user roles (170), and data partition entitlements (172) to ensure that authorized users may access specific resources and data. The access services (162) may include authentication and authorization mechanisms that verify the identity of users and determine their level of access to resources using the authorizations (168), the user roles (170), and the data partition entitlements (172).

The authorizations (168) are security authorizations that form a process of granting or denying a user access to a particular resource or action based on their identity and permissions. The authorizations (168) document the process of verifying and validating the identity of a user to determine the actions the user is allowed to perform and which resources the user is allowed to access. The authorizations (168) may include tokens used by the applications and services of the system (100) for users that have been verified and validated to have access to the system (100).

The user roles (170) are sets of permissions for the different levels of access and privileges that users have within the system (100) or application. The user roles (170) define the level of access a user has and what actions a user is allowed to perform based on the role assigned to a user. For example, a user may be assigned roles that grant read-only access, read-write access, *etc.*

The data partition entitlements (172) are sets of permissions that provide access to specific data. The data partition entitlements (172) may be based on user roles (170), group memberships, *etc.* The data partitions that correspond to the data partition entitlements (172) may align with the domain accounts (158).

Although described within the context of a client server environment with servers and user devices, aspects of the disclosure may be practiced with a single computing system and application. For example, a monolithic application may operate on a computing system to perform the same functions as one or more of the applications and services executed in the system (100).

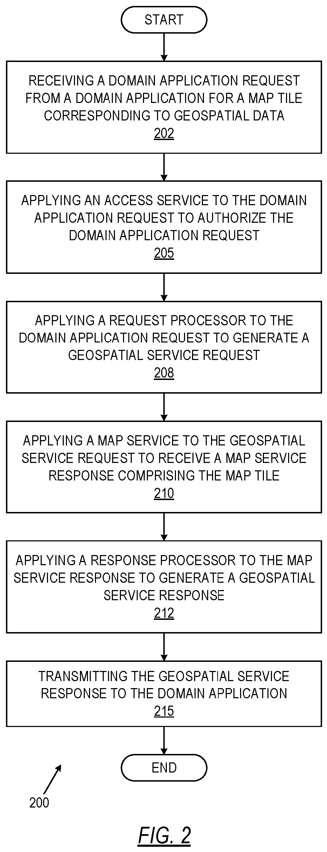

FIG. 2, FIG. 3, and FIG. 4 illustrate the processes (200), (300), and (400) for exposing and provisioning map services to applications as a practical application. In an embodiment, a system may include at least one processor and an application that, when executing on the at least one processor, performs the process (200). In one embodiment, a non-transitory computer readable medium may include instructions that, when executed by one or more processors, perform the process (200).

The processes (200), (300), and (400) render map tiles, provision map servers with multiple domain accounts, and utilize multiple platform configurations. The processes (200), (300), and (400) realize practical applications by generating map tiles with a map server and displayed with the domain application. Execution of one or more of the processes (200), (300), and (400) may reduce the amount of computational resources used by the computing system executing their domain application to result in an improvement to at least the computing system executing the domain application. Executing of one or more of the processes (200), (300), and (400) may further realize a practical application of a geospatial service that may process the requests and responses between domain applications and a map service. Executing the processes (200), (300), and (400) may reduce the amount of computational resources used to operate the geospatial service through the use of multi-tenant data to reduce the number of map servers being tracked and maintained. The processes (200), (300), and (400) may include multiple steps (*e*.*g*., Blocks (202) through (212), (302) through (310), and (402) through (410)) that may execute on the components described in the other figures, including those of FIG. 1, FIG. 13.1, and FIG. 13.2.

Turning to FIG. 2, Block (202) includes receiving a domain application request from a domain application for a map tile corresponding to geospatial data. The domain application request may be transmitted by a user device executing the domain application and received by a server executing an application as part of a geospatial service.

Block (205) includes applying an access service to the domain application request to authorize the domain application request. In an embodiment, the access service may be applied by extracting user authorization information from the domain application request and sending the user authorization information to a server executing the access service that verifies and validates whether a user is authorized to access the resources identified in the domain application request. The user authorization information may include a name of the user, an identifier for the user, credentials of the user, *etc.,* from which to identify the security authorizations, user roles, data partition entitlements, *etc.,* for the user of a domain application. The domain application request may then be authorized against the security authorization, the user role, and the data partition entitlement for the user of the domain application. After sending the user authorization information to an access service, the geospatial service that is processing a domain application request may receive access information from the access service. The access information may identify to the geospatial service whether the user of the domain application is authorized for access to the systems and data used to process the domain application request.

Block (208) includes applying a request processor to the domain application request to generate a geospatial service request. The request processor may be a program executing on a geospatial server of a geospatial service. The request processor may locate a mapping between the domain application that transmitted the request and the domain account on a map server of the map service used to process the domain application request. The domain application request may identify the computing system executing the domain application that sent the request without identifying the map server hosting the domain account used to process the request. The geospatial service request may identify the map server and domain account for processing the domain application request without identifying the domain application or the computing system executing the domain application.

Block (210) includes applying a map service to the geospatial service request to receive a map service response including the map tile. In an embodiment, applying the map service includes transmitting the geospatial service request to the map server of a map service, and receiving a map service response that corresponds to the geospatial service request. In an embodiment, a map server of the map service applies the geospatial service request to geospatial data ingested within a data partition of a map server of the map service to generate the map tile and form the map service response. In an embodiment, a map server processes the geospatial service request to generate one or more map tiles responsive to the geospatial service request. The map tiles are wrapped into the map service response that is transmitted from the map service to the geospatial service. To generate the map tiles, the map server processes geospatial data from the domain account hosted by the map server.

In an embodiment, map tiles may be generated by a map server by slicing geographic data into small, pre-rendered images that correspond to specific zoom levels and map extents. The map tiles may be cached and served to users on demand, allowing for faster loading times and smoother navigation experiences within the domain applications. Map tile generation may involve rendering vector data, such as roads, buildings, and terrain, into raster images that may be efficiently displayed in web browsers or mobile devices. Map servers may use algorithms to optimize tile generation, balancing factors like resolution, file size, and rendering speed to deliver high-quality maps while minimizing resource usage. Additionally, map servers may support tile caching strategies to further improve performance by storing frequently requested tiles for faster subsequent retrieval.

In an embodiment, the map server hosts multitenant data with a set of domain accounts corresponding to a set of data partitions. The set of domain accounts includes a domain account corresponding to the domain application. The set of domain accounts includes a domain account corresponding to a data partition of a set of data partitions.

Block (212) includes applying a response processor to the map service response to generate a geospatial service response. The response processor may be a program executing on a geospatial server of a geospatial service. The response processor may identify a mapping between the map server that sent the map service response and the domain application that initiated the response with a domain application request. The mapping may be identified with a deployment management service and a deployment database that tracks the domain accounts, map servers, and regions. The domain accounts host geospatial information, the map servers host the domain accounts, and the regions are where the map servers are instantiated. In an embodiment, the response processor may copy information from the map service responses into the geospatial service responses. The information copied may include geospatial information including map tiles, metadata, *etc.* In an embodiment, one map service response may correspond to one geospatial service response.

Block (215) includes transmitting the geospatial service response to the domain application. The map tile may be displayed by the domain application. After receiving the geospatial service response, the domain application may extract one or multiple map tiles from the geospatial service response and assemble the map tiles using metadata into a single image. The image may be displayed by the computing device executing the domain application to the user.

In an embodiment, the process (200) further includes provisioning a map server of the map service to a region to host a set of domain accounts including a domain account. The geospatial service may monitor the workload of the map servers used by the map service. When the workload reaches an upper threshold, *e.g*., when a map server is using 75 percent of available memory or processing to handle requests, the geospatial service may provision additional server instantiations to handle the workload without interruption. Conversely, when a lower threshold is reached, *e.g*., 25 percent of available memory or processing, the geospatial service may move domain accounts to other map servers and reduce the number of map servers and free up computational resources. The provisioning and instantiation may be done on a region-by-region basis to reduce latency and improve the efficiency of processing requests to generate responses with map tiles.

In an embodiment, the process (200) further includes receiving the domain application request within a set of domain application requests from a set of instances of the domain application to access a domain account. In other words, multiple instances of a domain application may be executing on one or more user devices. The multiple instances of a domain application may each send domain application requests that may be sent to the same domain account on the same map server within the map service by the geospatial service.

In an embodiment, the process (200) further includes presenting an alert responsive to satisfaction of a deployment threshold. In an embodiment, the deployment threshold may identify the value for the number of map servers in a certain region. When the number of servers being used in the region satisfies the deployment threshold, additional servers may be provisioned and instantiated in different regions.

In an embodiment, the process (200) further includes exposing an application programming interface (API) to the domain application. The domain application accesses the application programming interface using the domain application request. In an embodiment, the application programming interface is exposed by the geospatial service to the domain application. The procedure calls within the application programming interface of the geospatial service may be mapped to procedure calls of an application programming interface for the map service used to process geospatial service requests. Different map services may be used and one procedure call of the geospatial service application programming interface may map to multiple procedure calls for the application programming interfaces of the different map services.

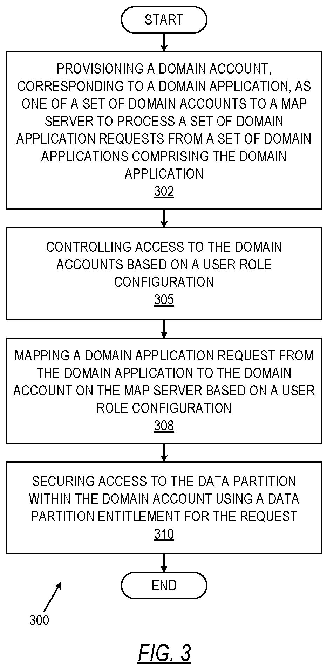

Turning to FIG. 3, Block (302) includes provisioning a domain account, corresponding to a domain application, as one of a set of domain accounts to a map server to process a set of domain application requests from a set of domain applications comprising the domain application. Provisioning the domain account may include domain application registration, domain account creation, domain account configuration, and map server integration. Registration may be performed responsive to receiving a registration request from the domain application that includes the name of the domain application, a description, and additional metadata. The credentials of the domain application may be verified to register the domain application. After registration, the domain account may be created in a database or directory service for the domain application. After creation, the domain account may be configured to include permissions and access controls to allow the domain application to access the map server. Configuration may include setting up authentication and authorization mechanisms, including SSL/TLS certificates and API keys. After configuration, the domain account may be integrated with the map server, which may involve setting up a connection between the domain account and the map server, which may include configuring the map server to accept requests from the domain application through the domain account.

Provisioning the domain account may further include validating credentials from the domain application. Validating credentials from the domain application may include receiving and verifying credentials, processing passwords, processing session tokens, and additional validation steps. For receiving and verifying credentials, the domain application provides credentials upon requesting access to the map server, in which the credentials may include a username and password. The username may be verified to match a username identified by the domain account. For processing passwords, the password received from the domain application may be hashed and compared with the hash password stored with the domain account. For processing session tokens, after the credentials are verified, the session tokens may be generated to be used by the domain application to access the map server. The session token may be stored to secure storage and then used by the domain application to access the map server without having to provide credentials again so long as the token remains valid. The additional validation steps may include internet protocol (IP) address validation and device validation to determine that the domain application is accessing the map server from a trusted location on a trusted device. IP address validation may check the IP address of the domain application to determine that IP address is within an allowed range of IP addresses that may correspond to a geographic location. Device validation may include checking device information to determine that the device executing the domain application and accessing the map server through the domain account is a trusted device.

Provisioning the domain account may further include creating the domain account on the map server. To create the domain account, account records that identify the domain account for the map server are updated to include credentials (the name of the account, a username, a password, *etc.*) provided by the domain application. The account records may be updated to specify permissions and access controls an application to access the map server.

Continuing with the process (300), Block (305) includes controlling access to the domain accounts based on a user role configuration. The control of access to the domain application may utilize roll-based access control, user role configuration, and access control lists. Role-based access control (RBAC) may be implemented, which assigns users to specific roles based on their job functions or responsibilities. Each role may be associated with a set of permissions and access controls that define the actions the user can perform on the domain accounts. The user role configuration is a set of rules that identifies, for each user, actions a user may perform on the domain accounts, including creating, reading, accessing, updating, deleting accounts, *etc.* A user role configuration is used to assign the permissions and access controls to each domain account, so that authorized users (and not unauthorized users) may access the accounts. Access control lists (ACLs) may be used to control access to the domain accounts. Access control lists are a set of rules that define which users or groups have access to a particular resource, such as a domain account. The access control lists may be updated in real-time to keep the system secure.

Controlling access to the domain accounts may further include determining that the user is authorized to access the domain account based on the user role configuration. When access to a domain account is attempted, the authorization of the user to access the domain account may be determined based on the user role configuration. The role and permissions of the user may be checked against the access control rules defined in the user role configuration. If the role and permissions of the user match the access control rules, access may be granted to the domain account.

Continuing with the process (300), Block (308) includes mapping a domain application request from the domain application to the domain account on the map server based on a user role configuration. Mapping the domain application request may include retrieving a user role configuration, extracting the role for a user, getting a domain account configuration, determining the domain account that corresponds to the domain application request, and updating the domain application request with the destination domain account. Retrieving the user role configuration may include retrieving the latest user role configuration from a repository (*e*.*g*., database or file system) that defines which domains are mapped to specific accounts and any applicable restrictions. Extracting the role of a user may include extracting the role of the user from the identity information or authentication session for the user to determine the mappings to consider. Getting the domain account configuration may include retrieving the mapping configuration of the domain account that corresponds to the extracted user role. The mapping configuration may specify the domain accounts that are associated with the user role and any appropriate settings (*e*.*g*., account permissions). Determining the domain account may include selecting, based on the retrieved configuration and user preferences, the appropriate domain account (also referred to as the destination domain account) as the destination to which to map the domain application request. The selection involves using a round-robin approach, affinity rules (*e*.*g*., always map to same account), or other strategies. Updating the domain application request with the destination domain account may include updating the original domain application request with information for the destination domain account, which may involve modifying headers, query parameters, or other relevant data in the request.

Mapping the domain application request may further include retrieving the user role configuration. The user role configuration may be retrieved by first checking if the current user is authenticated and has sufficient permissions to access this information. If not, an error message may be displayed. The profile information of the user may then be retrieved from a database or authentication service. The profile contains the roles and permissions of the user and may be stored in a secure storage mechanism such as encrypted JSON data or a secure key-value store. Using the retrieved user profile, the domain application request is mapped to the role configuration of the user by examining attributes, headers, and query parameters to determine appropriate roles. Business logic rules may also be applied for validation against the role configuration of the user. If successful, the program executes permissions to determine whether to allow or deny access to specific resources or actions. When the checks pass, a success response with the retrieved user role configuration may be returned.

Mapping the domain application request may further include executing a mapping algorithm to map the domain application request to the map server. The request is received and parsed to extract relevant information, which may be performed using natural language processing (NLP) or machine learning techniques. The availability of map servers is determined and a map server is selected. The selection process may identify the map server for a given domain application request based on factors such as location, data format, security requirements, *etc.* Algorithms that may be used for selecting the map server may include least squares programming (LSP) optimization, genetic algorithm-based selection, particle swarm optimization (PSO), simulated annealing (SA), clustering or K-means algorithm, *etc.* Communication may then be established with the selected map server to execute geospatial algorithms or other techniques to return map tiles rendered from geospatial data.

Mapping the domain application request may further include receiving the domain application request from a geospatial interface element (also referred to as a frontend component) incorporated into the domain application. The geospatial interface element may execute on a browser on a user device that may be operated by a user.

Continuing with the process (300), Block (310) includes securing access to the data partition within the domain account using a data partition entitlement for the domain application request. That the domain application request is valid and meets sufficient criteria is verified before checking active data partition entitlements associated with the requesting domain account. Minimum security controls to be utilized based on the data partition entitlements and request requirements are determined. A secure communication channel with the map server using appropriate encryption methods may be established. The domain account may be authenticated and authorized. Access controls may be enforced so that authorized users and processes may view or edit a requested data partition to access geospatial data to render map tiles.

Securing access to the data partition may further include retrieving the data partition entitlement corresponding to the domain account. The domain account information may be retrieved. A search may be performed to identify a match between the domain account information and the data partition entitlement. Results from the search may be filtered and prioritized based on criteria that may include priority or security protocols. Secure tokens or certificates for authentication purposes may be generated and returned that may be used for accessing the data partition entitlement.

Securing access to the data partition may further include authorizing access to the domain account by comparing permissions from the user role to the data partition entitlement. User role information may be retrieved. The permissions of the user, from the user role information, may be compared to the permissions defined in the data partition entitlement by using predefined permission mapping rules, which may include rules based on role-based access Control (RBAC) mapping, attribute-based access control (ABAC) mapping, mandatory access control (MAC) mapping, discretionary access control (DAC) mapping, *etc.* Authorized users may view or edit the requested data partition based on the comparison.

The process (300) may further include receiving the domain application request and transmitting a geospatial service response. The domain application request is received and validated. The domain application request may be executed to generate output data (*e.g.,* authorization codes, map tiles, *etc.*) in a standardized format that is packaged for transmission in the geospatial service response. The geospatial service response with the output data is transmitted to the domain application.

Receiving the domain application request may include receiving the domain application request from the domain application for a map tile corresponding to geospatial data. The request may be received from a user interface or API endpoint. Information such as location and size may be extracted from the domain application request and the domain application request may be validated. Coordinates of the requested map tile may be determined based on validated parameters from the domain application request. The availability of geospatial data associated with the determined coordinates may be verified.

Transmitting a geospatial service response may include transmitting a geospatial service response comprising a map tile from the map server of a map service to the domain application. The map tile may be displayed by the domain application. A map tile format may be determined for the map tile. Map tile formats may offer efficient storage and transmission of large-scale geospatial datasets and may include Portable Network Graphics (PNG), Web Picture (WebP), Joint Photographic Experts Group (JPEG), Georeferenced Tagged Image File Format (GeoTIFF), Web Map Service (WMS), *etc.* The output data (*e.g.,* the map tile) may be generated and formatted in accordance with the map tile format and then packaged for receipt by the requesting domain application.

The process (300) may further include provisioning a map server and receiving the domain application request. The provisioning may include configuring infrastructure for the map server, which may include setting up hardware, software, and network connections to support geospatial services. Geospatial service software, such as geographic information system (GIS) clients, mapping engines, data processing tools, *etc.,* may be installed. Database storage may be set up to store and manage geospatial data by creating tables, indexes, and other data structures for efficient data retrieval and querying. Data partitioning may be implemented, such as sharding or range-based partitioning, to divide the stored data into smaller, more manageable chunks for improved performance and scalability. Map service protocols may be configured to enable communication between the map server and client applications, and may include hypertext transfer protocol (HTTP), HTTP secure (HTTPS), or other custom protocols. Geospatial Services may be tested using testing scripts and tools to verify that the geospatial services are functioning correctly, including mapping, querying, and data retrieval.

Provisioning the map server may include provisioning a map server of a map service to a region to host a set of domain accounts comprising a domain account. Region selection criteria may be determined, such as geographical location, latency requirements, data storage requirements, *etc.* Available regions may be identified in a list of available regions with suitable locations to host the map server based on the determined selection criteria. Regional Infrastructure may be evaluated for suitability of resources in each identified region and may be based on network connectivity, hardware capabilities, operational availability, *etc.* A region for the map server may be selected using the evaluated regional infrastructure to select a suitable region to host the map server accounting for factors like latency, data transfer rates, regional support, *etc.* Data storage may be configured within the selected region that is suitable for the domain accounts being hosted to store geospatial data and provide querying and retrieval services. Map server security measures may be set up using security protocols defined by the map service to protect the map server from unauthorized access and may use encryption and authentication techniques.

Receiving the domain application request may include receiving the domain application request within a set of domain application requests from a set of instances of the domain application to access the domain account. Domain application requests may be received from multiple instances of multiple domain applications. Requests may be filtered and prioritized with filtering criteria such as priority or urgency to process incoming domain application requests efficiently and handle prioritized requests ahead of nonprioritized requests. Unique request identifiers (IDs) for the domain application requests may be utilized with the request list to identify each request and distinguish between different client applications accessing the same resources. The request IDs may be mapped to domain accounts using an account mapping table or database management system. Request parameters may be verified and entitlements may be validated using rules defined in the domain application so that each request adheres to the parameters and checks for valid entitlements when accessing the domain account.

The process (300) may further include applying a map service by transmitting the geospatial service request to a map server of the map service. The map server hosts multitenant data with a set of domain accounts corresponding to a set of data partitions. The set of domain accounts comprises a domain account corresponding to the domain application. Geospatial service request may be generated based on user input or other data sources, specifying required coordinates, zoom levels, and spatial reference systems. Map server compatibility may be verified with compatibility checks for supported protocols and formats so that the generated request is compatible with the capabilities of the map server. Domain application requests are mapped to a domain account using account mapping rules or database management systems so that data partitions match user entitlements. Data partition entitlements may be determined, based on the mapped request, for relevant data partition entitlements to identify active entitlements for accessing the requested geospatial service.

The process (300) may further include applying a map service by transmitting the geospatial service request to a map server of the map service. The map server hosts multitenant data with a set of domain accounts corresponding to a set of data partitions. The set of domain accounts comprises a domain account corresponding to a data partition of the set of data partitions. The process (300) may generate a geospatial service request based on user input or other data sources, specifying coordinates, zoom levels, and spatial reference systems. A compatibility check may be performed to determine that the generated request is compatible with the capabilities of the map server. The generated request may be mapped to a specific domain account using account mapping rules or database management systems so that data partitions match user entitlements. A determination may be made as to identify a relevant data partition that corresponds to a specified domain account and associated data partition. Entitlements for accessing the determined data partition may be verified to determine that user permissions align with requested access requirements.

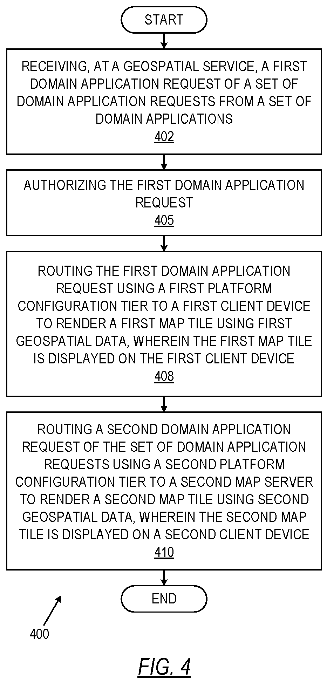

Turning to FIG. 4, Block (402) includes receiving, at a geospatial service, a first domain application request of a set of domain application requests from a set of domain applications. The first domain application request may be one of multiple domain application requests that are received and may be buffered in memory or temporary storage. Request headers of the first domain application request may be parsed to extract relevant information, including the request method, protocol version, uniform resource identifier (URI), *etc.* The request body may be parsed to extract request parameters and payload. The first domain application request may be validated to determine that the first domain application request conforms to an expected format and contains all suitable information. The validated request may be queued for processing, allowing the geospatial service to handle the multiple domain application requests concurrently with prioritization. An acknowledgment may be sent to the requesting domain application to confirm receipt of the first domain application request.

Block (405) includes authorizing the first domain application request. The first domain application request may be authenticated by verifying a digital signature, timestamp, *etc.,* to ensure the first domain application request is from a trusted source. The domain application, client device, user, *etc.,* may be identified by checking the request headers, cookies, or other identifying information to determine identity and credentials. The first domain application request may be checked against an access control list (ACL) to determine if sufficient permissions to access the requested resource are available. The role or privileges of the user may be checked against a role-based access control (RBAC) system to determine if the user has sufficient permissions to access the requested resource. Additional attributes, such as location, time of day, other contextual information, *etc.,* may be checked using an attribute-based access control (ABAC) system to determine that the user has sufficient permissions to access the requested resource. The first domain application request may be evaluated against a set of policies or rules to determine that the first domain application request is authorized. An authorization decision may be made based on the results of one or more of the previous checks. The authorization decision may be logged for auditing and compliance.

Authorizing the first domain application request may further include authorizing a role of a first user corresponding to a first domain application. The role associated with the first user corresponding to the first domain application may be retrieved from a role management system or a database. The retrieved role may be verified to ensure the role exists and is valid. The retrieved role may be mapped to a set of permissions or access rights that define the privileges of the role. The permissions or access rights associated with the role may be evaluated to determine if the role has sufficient permissions to access the requested resource. The role may be checked against a role-based access control (RBAC) system to determine if the role has the sufficient permissions to access the requested resource. An authorization decision may be made based on results from the previous steps. The authorization decision may be logged for auditing and compliance.

Authorizing the first domain application request may further include authorizing a data entitlement of a first user corresponding to a first domain application. The data entitlement associated with the first user corresponding to the first domain application may be retrieved from a data entitlement management system or a database. The retrieved data entitlement may be verified to ensure the data entitlement exists and is valid. The retrieved data entitlement may be mapped to a set of data attributes or fields that define the scope and boundaries of the data entitlement. The data attributes or fields associated with the data entitlement may be evaluated to determine that the data entitlement has sufficient permissions to access the requested data. Additionally, the data entitlement may be checked against a data access control system to determine that the data entitlement has sufficient permissions. An authorization decision may be made based on the results of the previous steps. The authorization decision may be logged for auditing and compliance.

Block (408) includes routing the first domain application request using a first platform configuration tier to a first client device to render a first map tile using first geospatial data. The first domain application request may be routed using information from the first platform configuration tier for the first domain application that may identify data locations and rendering platforms. The configuration settings of the first platform configuration tier, including the geospatial data storage location and rendering parameters, may be retrieved. The first geospatial data may be retrieved from the storage location specified in the configuration settings. A first map tile may be rendered using the retrieved geospatial data and rendering parameters. The first map tile may be displayed on the first client device using the generated map tile and the rendering capabilities of the client device. The first map tile may be displayed on the first client device to visualize the geospatial data.

Routing the first domain application request may include routing the first domain application request using the first platform configuration tier to the first client device to access a first geospatial database to retrieve the first geospatial data for the first map tile. The first geospatial data may be retrieved from the first geospatial database. The retrieved geospatial data may be processed to prepare the geospatial data for rendering as a map tile. The first map tile may be rendered using the processed geospatial data and the rendering parameters on the first client device.

Block (410) includes routing a second domain application request of the set of domain application requests using a second platform configuration tier to a second map server to render a second map tile using second geospatial data. The configuration settings of the second platform configuration tier, including the map server connection details, geospatial data location, rendering parameters, *etc.,* may be retrieved. A connection to the second map server may be established using the retrieved connection details. The second geospatial data may be retrieved. The retrieved geospatial data may be processed to prepare for rendering the second map tile. The second map tile may be rendered using the processed geospatial data and the rendering parameters on the second map server. The second map tile may be transmitted to and displayed on the second client device to visualize the geospatial data.

Routing the second domain application request may further include managing access, using a cache, to a second geospatial database to retrieve the second geospatial data for the second map tile. The cache may be checked to see if the second geospatial data is already stored in the cache. If a cache hit is found, the second geospatial data may be retrieved from the cache. If a cache miss is found, the second geospatial data may be retrieved from the second geospatial database. The second geospatial data may be retrieved from the second geospatial database using a query or other data retrieval mechanism. The retrieved second geospatial data may be processed to be prepared for rendering as a map tile. The cache may be updated with the retrieved second geospatial data so that future requests for the same data may be served from the cache. The second map tile may be rendered using the processed second geospatial data and the rendering parameters on the second map server.

Routing the second domain application request may further include provisioning a sixth domain account for a sixth domain application to the second map server in addition to a second domain account for a second domain application on the second map server. The sixth domain account for the sixth domain application may be retrieved. The existence and validity of the sixth domain account may be verified. A new domain account for the sixth domain application may be created on the second map server. The sixth domain account may be configured with the sufficient settings and permissions for the sixth domain application.

The process (400) may further include routing a third domain application request of the set of domain application requests using a third platform configuration tier to a third client device to render a third map tile using third geospatial data. The third domain application request may be routed using the third platform configuration tier. The configuration settings of the third platform configuration tier, including the geospatial data details and rendering parameters, may be retrieved. The third geospatial data may be retrieved. The retrieved third geospatial data may be processed to be prepared for rendering as a map tile. The third map tile may be rendered using the processed third geospatial data and the rendering parameters on the third client device. The third map tile may be displayed on the third client device to visualize the geospatial data.

Routing the third domain application request may include using the third platform configuration tier to the third client device to access, using a cache, a third geospatial database to retrieve the third geospatial data for the third map tile. The cache may be checked to see if the third geospatial data is already stored in the cache. If a cache hit is found, the third geospatial data may be retrieved from the cache. If a cache miss is found, the third geospatial data may be retrieved from the third geospatial database. The third geospatial data may be retrieved from the third geospatial database using a query or other data retrieval mechanism. The retrieved third geospatial data may be processed to be prepared for rendering as a map tile. The cache may be updated with the retrieved third geospatial data for future requests for the same data. The third map tile may be generated using the processed third geospatial data and the rendering parameters on the third client device.

The process (400) may further include routing a fourth domain application request of the set of domain application requests using a fourth platform configuration tier to a fourth map server to render a fourth map tile using fourth geospatial data. The fourth domain application request may be routed using the fourth platform configuration tier. The configuration settings of the fourth platform configuration tier, including the map server connection details and rendering parameters, may be retrieved. A connection to the fourth map server may be established using the retrieved connection details. The fourth geospatial data may be retrieved. The retrieved fourth geospatial data may be processed to be prepared for rendering as a map tile. The fourth map tile may be rendered using the processed fourth geospatial data and the rendering parameters on the fourth map server. The fourth map tile may be transmitted to and displayed on the fourth client device to visualize the geospatial data.

Routing a fourth domain application request may further include managing access, using a cache, to a fourth geospatial database to retrieve the fourth geospatial data for the fourth map tile. A cache-based retrieval strategy that stores frequently accessed geospatial data in memory, reducing the need for repeated database queries, may be used to manage access to the geospatial data. A geospatial database query may be executed using the cache and query logic defined for a set of map tiles, including the fourth map tile, to retrieve sufficient data from the fourth geospatial database. A cache hit or miss detection process checks whether the desired data is already cached, and if so, returned. Geospatial data retrieval occurs based on the query logic and cache hit detection results. The retrieved data may undergo validation against defined schema requirements to ensure that the geospatial data conforms to expected formats and normalization may be applied to standardize coordinates or other geospatial attributes. The cache may be updated with the retrieved data after validation for future requests.

The process (400) may further include routing a fifth domain application request of the set of domain application requests using a fifth platform configuration tier to a fifth map server to render a fifth map tile using fifth geospatial data. The fifth map tile is displayed on a fifth client device.

Routing the fifth domain application request may further include using the fifth platform configuration tier to route the fifth domain application request to the fifth map server to access an integrated database of the fifth map server to retrieve the fifth geospatial data for the fifth map tile. The fifth platform configuration tier may be used to establish a connection with the fifth map server. A query or other data retrieval mechanism may be used to retrieve the fifth geospatial data from the integrated database by the fifth map server. The retrieved fifth geospatial data may be subsequently processed to be prepared for rendering the fifth map tile, using parameters specified in the configuration settings. The processed fifth geospatial data may then be used to generate and render the fifth map tile on the fifth map server. The fifth map tile may be transmitted to and displayed on the fifth client device to visualize the geospatial data.

The process (400) may further include monitoring and alerting. Monitoring may include monitoring access by a first domain application of the set of domain applications using the first platform configuration tier. To monitor access to the system, access information about requests from domain applications using the first platform configuration tier may be gathered to monitor access to the system. The access information, including details of the request and any relevant metrics or performance data, may be then used to assess whether access was granted successfully. A decision log entry may be generated based on this outcome, including details of the request, any relevant metrics or performance data, and the result of the access assessment. The decision log entry may be stored in a database for later reference or reporting purposes.

Alerting may include alerting the first domain application to recommend changing from the first platform configuration tier. Logs of previous requests made by the first domain application using the first platform configuration tier may be analyzed to identify issues, errors, security concerns, *etc.,* that may impact access decisions. With results from the analysis, a recommendation may be generated suggesting a different platform configuration tier or alternative configurations or adjustments that may be utilized to improve performance or security for the interactions of the first domain application within the system. The recommendation may be presented to a user through a notification (*i.e.,* an alert) within the first domain application itself or as part of an external alert system.

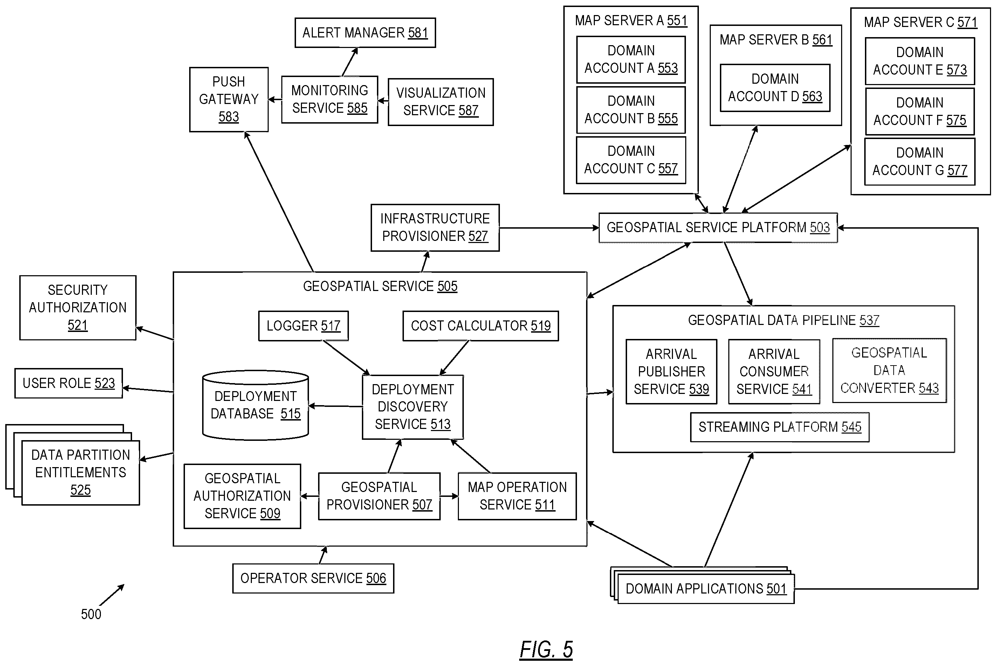

Turning to FIG. 5, an implementation with additional details from FIG. 1 is described. The system (500) processes requests and responses to generate map tiles for the domain applications (501) utilizing multi-tenant data. The domain applications (501) utilize the geospatial information system platform (503) in order to use the map servers A (551) through C (571) to generate and display map tiles. The geospatial service platform (503) provides for communication between the domain applications (501) and the map servers A (551) through C (571) utilizing the geospatial service (505) and the geospatial data pipeline (537). In an embodiment, the users of the system (500) may include people operating computing systems to execute one or more of the domain applications (501). In an embodiment, the users of the system (500) may include other automated processes or programs that operate one or more of the domain applications (501).

The geospatial service (505) provisions the map servers A (551) through C (571) and processes requests and responses between the domain applications (501) and the map servers A (551) through C (571). The geospatial service (505) may utilize several other applications, services, and programs to perform the provisioning and processing. The applications, services, and programs include the geospatial provisioner (507), the geospatial authorization service (509), the map operation service (511), the deployment discovery service (513), the deployment database (515), the logger (517), and the cost calculator (519). The geospatial provisioner (507) may be operated by the operator service (506).

The operator service (506) is a service that may initiate the operation of the geospatial service (505) for various accounts. For example, users of the system (500) my sign up with the operator for access to the system (500). The operator service (506) may then utilize the geospatial provisioner (507) to initialize the domain accounts for the different users on the map servers A (551) through C (571).

The geospatial provisioner (507) is an application of one or more programs within the geospatial service (505). The geospatial provisioner (507) may operate to provision the map servers A (551) through C (571) with the domain accounts A (553) through G (577) based on user authorization that is performed with the geospatial authorization service (509).

The geospatial authorization service (509) is an application of one or more programs within the geospatial service (505). The geospatial authorization service (509) authorizes use of the system (500) by the users of the system (500). Authorization of a user may be based on the security authorization (521), the user role (523), and the data partition entitlements (525).

The security authorization (521) is an authorization that a user may use the system (500). The security authorization (521) may be based on a username and password passed by the domain applications (501) that are being operated by a user. The security authorization (521) for a user may be based on the user role (523) and the data partition entitlements (525).

The user role (523) identifies a role of a user of the system (500). Different roles include field engineers that gather data, e.g., from a well head, and data scientists that process the data collected by the field engineers. As an example, a user role for a field engineer may allow for writing data gathered from a well head and a user role for a data scientist may allow for reading the data gathered from a well head and writing analysis data.

The data partition entitlements (525) are collections of data that identify the users that may access certain partitions of the data available to the system (500). In other words, the data partition entitlements (525) are entitlements (*e*.*g*., files or other collections of data) that identify the data partitions that individual users may access. The data partitions referenced by the data partition entitlements (525) may correspond to the domain accounts A (553) through G (577) on the map servers A (551) through C (571).

The map operation service (511) is an example of one or more programs within the geospatial service (505). In an embodiment, the map operation service (511) may include a request processor and response processor to convert requests from the domain applications (501) to requests suitable for the map servers A (551) to C (571) and convert responses from the map servers A (551) to C (571) to responses suitable for the domain applications (501). The map operation service (511) may use the deployment discovery service (513) to identify which domain applications (501) correspond to which domain accounts A (553) through G (577).

The deployment discovery service (513) is an application of one or more programs within the geospatial service (505). In an embodiment, the deployment discovery service (513) provides information from the deployment database (515) to other programs to identify the deployments of the map servers A (551) to C (571) and the domain accounts A (553) to G (577) for other programs to use to facilitate access to the domain accounts A (553) to G (577) and the map servers A (551) to C (571). The deployment discovery service (513) may be utilized by the map operation service (511), the geospatial provisioner (507), the logger (517), and the cost calculator (519).

The deployment database (515) is an application of one or more programs within the geospatial service (505). The deployment database (515) stores information about the deployments of the map servers A (551) to C (571) and the domain accounts A (553) through G (577).

The logger (517) is an application of one or more programs within the geospatial service (505). In an embodiment, the logger (517) generates logs that record the events of the usage of the map servers A (551) to C (571).

The cost calculator (519) is an application of one or more programs within the geospatial service (505). In an embodiment, the cost calculator (519) may calculate and store information that identifies the amount of resources used over time for the map servers A (551) to C (571).

The infrastructure provisioner (527) is a program that operates in conjunction with the geospatial service (505) as part of the geospatial service platform (503). In an embodiment, the infrastructure provisioner (527) accesses the application programming interfaces of a mapping service to provision the map servers A (551) to C (571). The infrastructure provisioner (527) may also provision the domain accounts A (553) to G (577) to the map servers A (551) to C (571).

The push gateway (583) is a collection of programs that operate to collect and scrape metrics from the geospatial service (505). The push gateway (583) allows the geospatial service (505) to push metrics to the push gateway (583), which then stores the metrics temporarily and exposes the metrics to the monitoring service (585).

The monitoring service (585) monitors the usage of the geospatial service platform (503). In an embodiment, the monitoring service (585) may scrape the metrics from the push gateway (583) and store the metrics for use by the visualization service (587) and the alert manager (581).

The visualization service (587) is a collection of programs that operate to visualize the data collected by the monitoring service (585) about the usage of the geospatial service platform (503). In an embodiment, the visualization service (587) may provide a dashboard to show metrics scraped by the monitoring service (585) from the push Gateway (583). The dashboard displays metrics through a visual interface and may include one or more charts and graphs.

The alert manager (581) is a collection of programs that operates to generate and transmit alerts based on the usage of the geospatial service platform (503). In an embodiment, the alert manager (581) may compare the metrics from the monitoring service (585) to thresholds to identify alerts that may be transmitted to users. In an embodiment, a threshold may identify the total load or cost in a region for a set of map servers and, when the metrics indicate that the threshold is met, an alert may be generated and sent to a user. For example, when the threshold is met, the system (500) may balance the load between multiple regions automatically and send an alert to indicate that the threshold was met and identify the actions taken.

The map servers A (551), B (561), and C (571) generate responses to requests provided through the geospatial service platform (503). The map server A (551) hosts the domain accounts A (553), B (555), and C (557). The map server B (561) hosts the domain account D (563). The map server C (571) hosts the domain accounts E (573), F (575), and G (577). A request may identify a particular map server and a particular domain account, which are then used to generate map tiles that are included in a response to the request. The response with the map tiles is sent back to the geospatial service platform (503).

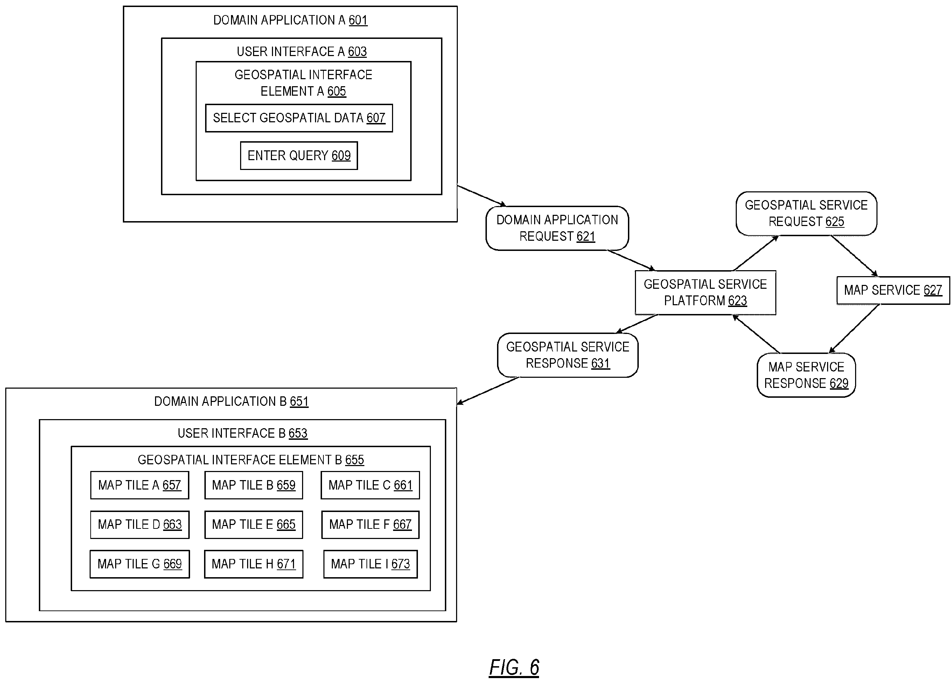

Turning to FIG. 6, the system (600) processes requests and responses to generate map tiles for the domain applications (501) utilizing multi-tenant data. The domain application A (601) includes the user interface A (603) with the geospatial interface element A (605). The geospatial interface element A (605) is a programming widget that includes user interface components to generate and transmit requests as well as receive and display responses. The geospatial interface element A (605) includes the interface elements (607) and (609). The interface element (607) is a button that, when selected, may bring up a dialogue to allow the user to specify a data source from which to make a map. The interface element (609) is another button that, when selected, may bring up another dialogue to allow the user to specify a query to refine the data displayed in the map. After receiving the data selection and query with the interface elements (607) and (609), the geospatial interface element A (605) generates the domain application request (621) that is transmitted to the geospatial service platform (623).

The geospatial service platform (623) receives the domain application request (621). The domain application request (621) is converted to the geospatial service request (625), which is transmitted to the map service (627). As part of the conversion, the geospatial service platform (623) may authorize the domain application request (621) and identify a domain account and map server within the map service (627) for processing the geospatial service request (625).

The map service (627) receives the geospatial service request (625). The map service (627) processes the geospatial service request (625) using the domain account and map server specified within the geospatial service request (625). Processing the geospatial service request (625) generates a set of map tiles that are included in the map service response (629), which is transmitted to the geospatial service platform (623).

The geospatial service platform (623) receives the map service response (629). The map service response (629) is converted to the geospatial service response (631), which is transmitted to the domain application B (651). The geospatial service response (631) includes the map tiles generated by the map service (627) and provided in the map service response (629).

The domain application B (651) is an updated version of the domain application A (601). The domain application B (651) is updated from the domain application A (601) to include the updated user interface B (653) and the updated geospatial interface element B (655). The user interface element B (653) is updated from the user interface element A (603) to include the updated geospatial interface element B (655). The geospatial interface element B (655) is updated from the geospatial interface element A (605) to display a map with the map tiles A (657), B (659), C (661), D (663), E (665), F (667), G (669), H (671), and I (673). In an embodiment, the geospatial service response (631) included metadata with the map tiles A (657) to I (673) to describe the placement of the map tiles A (657) to I (673) and display a map. For example, the metadata for the map tile E (665) may indicate that the map tile E (665) is to the right of the map tile D (663), to the left of the map tile F (667), below the map tile B (659), and above the map tile H (671). Similar metadata may be included for the remaining map tiles.

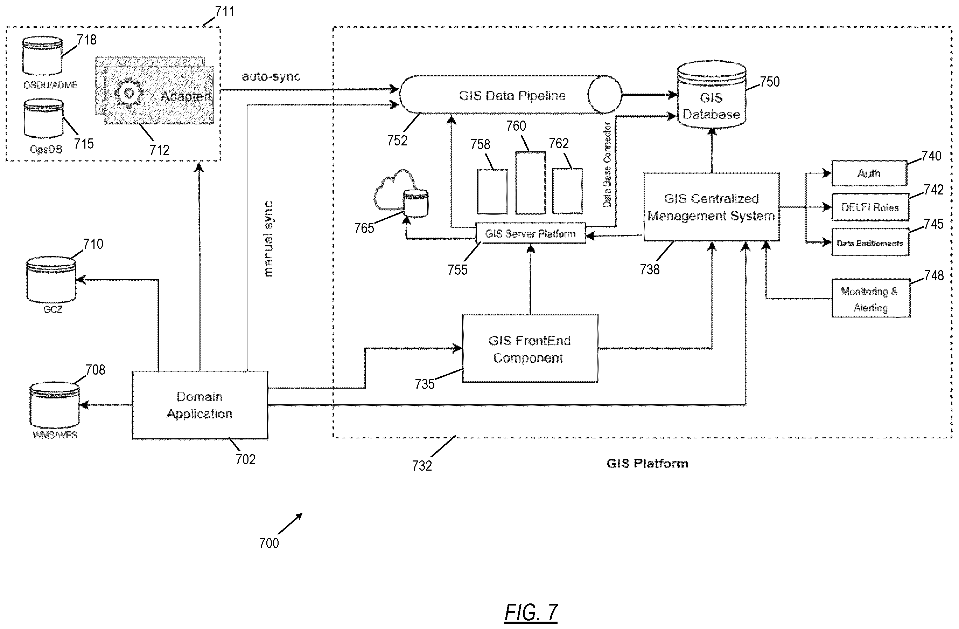

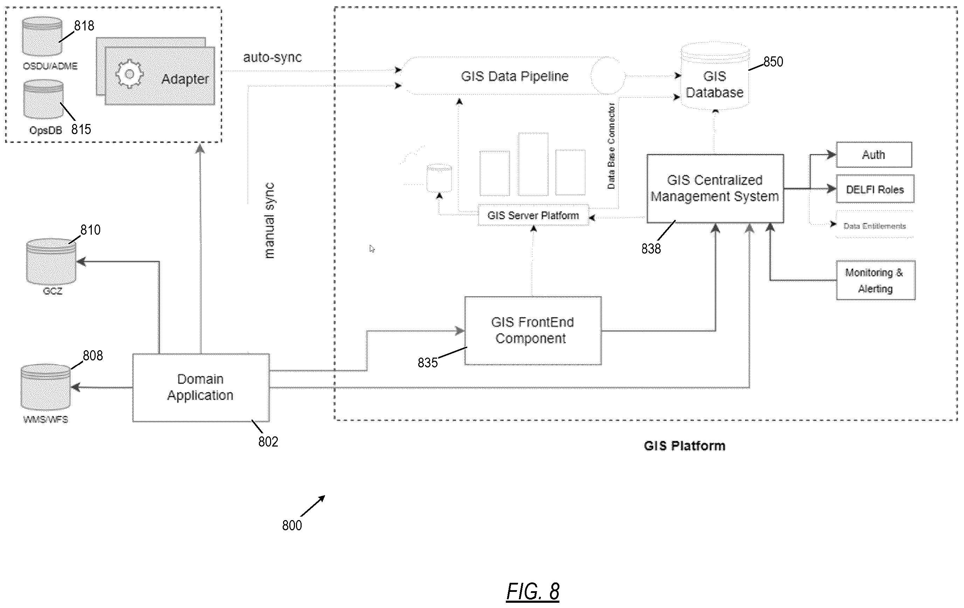

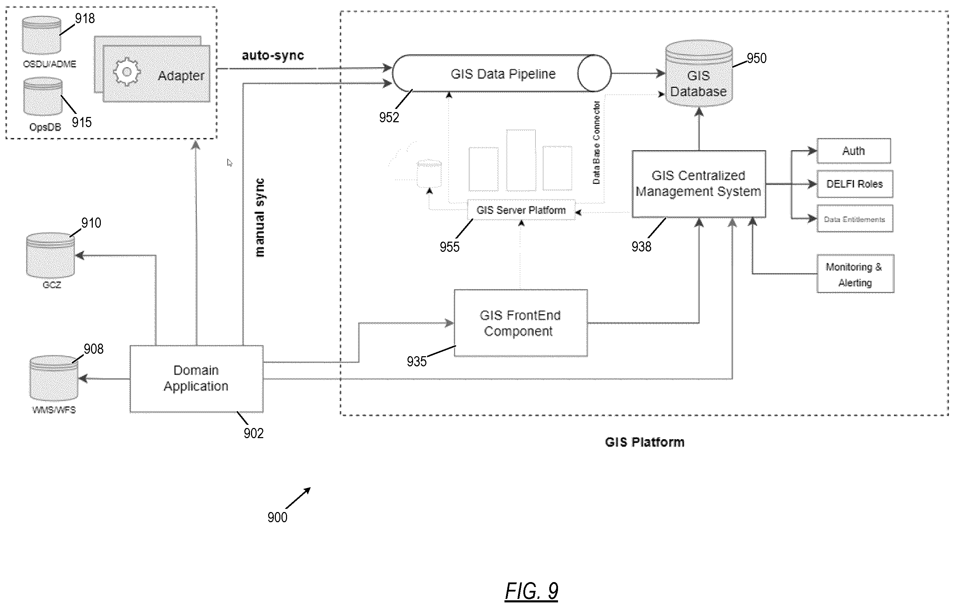

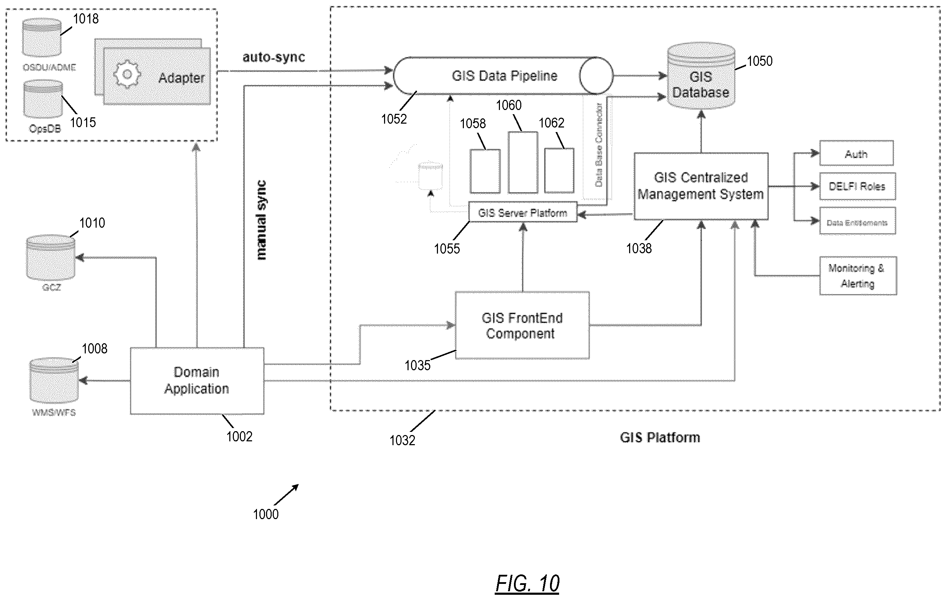

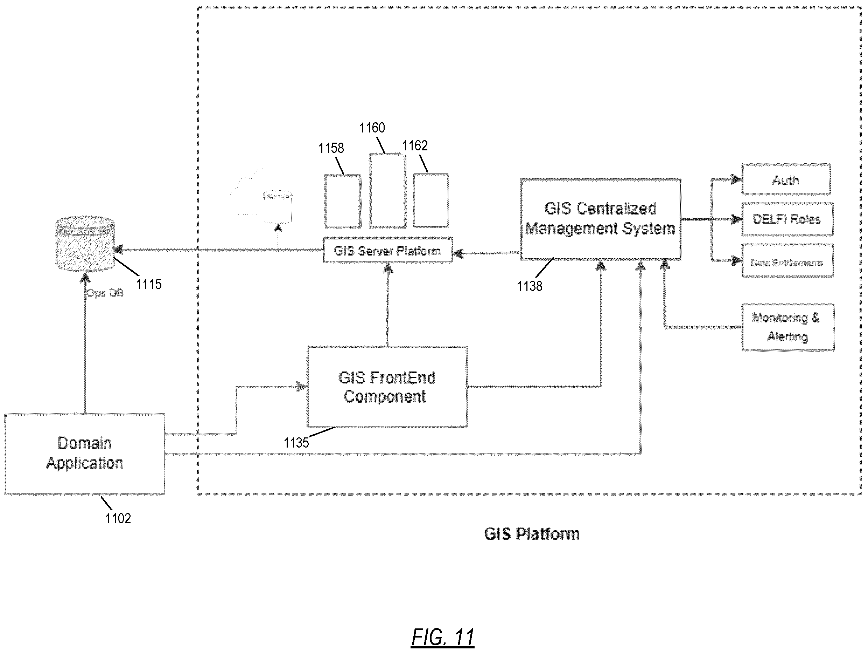

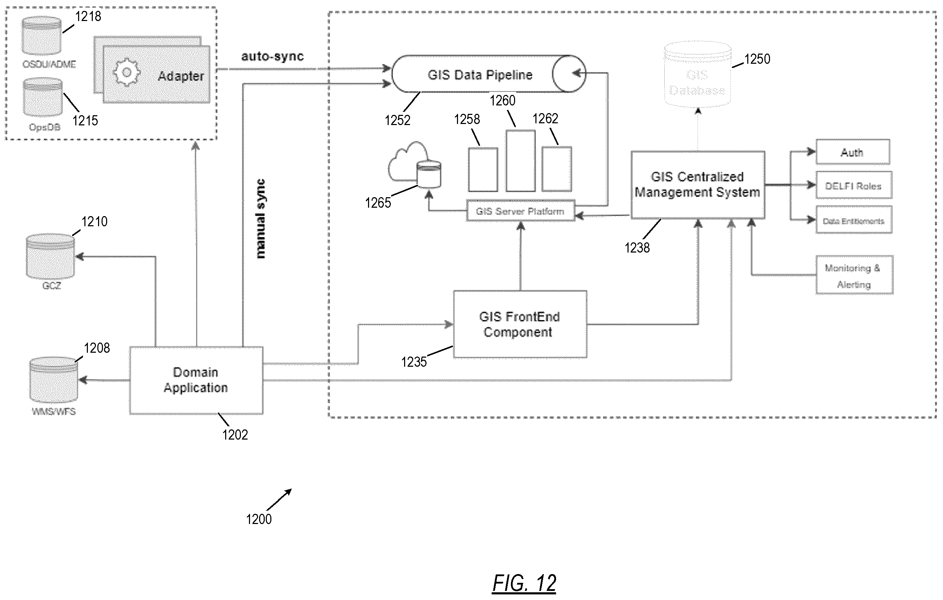

FIG. 7 through FIG. 12 show examples in accordance with the disclosure. FIG. 7 shows the system (700) that may render map tiles utilizing multiple platform configuration tiers. FIG. 8 shows the domain application (802) utilizing a platform configuration tier with client side rendering without caching the geospatial information. FIG. 9 shows the domain application (902) utilizing a platform configuration tier with client side rendering that also caches geospatial information. FIG. 10 shows the domain application (1002) utilizing a platform configuration tier with server side rendering managed by the platform (1032). FIG. 11 shows the domain application (1102) utilizing a platform configuration tier with server side rendering managed by the domain application (1102). FIG. 12 shows the domain application (1202) utilizing a platform configuration tier with server side rendering with an integrated database (1265).

Turning to FIG. 7, the system (700) is an example of an embodiment of the disclosure. The system (700) renders map tiles for domain application (702) utilizing the frontend component (735).

The domain application (702) utilizes the frontend component (735) to render map tiles. The map tiles are rendered with data available from multiple sources and services include the sources (708), (710), (715), and (718), which may be exposed as services.

The data source (708) provides access to geospatial data. The data source (708) may be a Web Map Service or Web Feature Service (WMS/WFS).

The data source (710) may be a geographic coordinate zone (GCZ). The geographic coordinate zone may be used by the domain application (702) to define a specific area or zone on a surface of the Earth for a location of a map tile.

The data services (711) is a collection of components that may provide access to geospatial information. The data services (711) include the data sources (718) and (715) that may be accessed through the adapters (712).

The adapters (712) are software components. The adapters (712) enable data exchange and integration from the data sources (718) and (715).

The data source (718) is an open subsurface data universe / asset and data management environment (OSDU/ADME). The data source (715) may be a cloud-based platform designed to manage and integrate subsurface data from various sources, including oil and gas companies, government agencies, and research institutions.

The data source (715) may be an operational database (OpsDB). The data source (715) may be a type of database designed to manage and store operational data from various sources, such as sensors, devices, and systems.

The platform (732) is a geographic information system (GIS) platform. The platform (732) utilizes the frontend component (735), the management system (738), the authorization component (740), the role component (742), the entitlements component (745), the monitoring and alerting component (748), the database (750), the pipeline (752), the server platform (755), the map servers (758), (760), and (762), and the integrated database (765).

The frontend component (735) is a software component of the platform (732) incorporated into the domain application (702) to render map tiles with geospatial data. Rendering of the map tiles may occur on the client device or on one of the map servers (758) through (762) based on the platform configuration tier utilized by the domain application (702). The frontend component (735) handles user interactions, presents data to the user, and receives input from the user. The frontend component (735) may include buttons, text fields, checkboxes, radio buttons, drop-down menus, data grids, charts and graphs, maps, forms, dialog boxes, *etc.*

The management system (738) (also referred to as a geographic information system (GIS) centralized management system) manages access to the components of the platform (732) by the domain application (702). Access is managed using the authorization component (740), the role component (742), the entitlements component (745), and the monitoring and alerting component (748).

The authorization component (740) is a software component that controls access to the resources, data, and functionality provided by the platform (732). The authorization component (740) authorizes the use of the frontend component (735) by the domain application (702).

The role component (742) may be a software component. The role component (742) controls access to the platform (732) based on a role of a user of the application (702).

The entitlements component (745) may be a software component. The entitlements component (745) enforces data entitlements for users of the system (700).

The monitoring and alerting component (748) may be a software component that monitors the performance of the resources of the platform (732) utilized by the domain application (702) and generates alerts based on the monitored performance. The monitoring and alerting component (748) may collect data from logs to generate metrics that may identify potential issues, anomalies, and trends. The potential issues, anomalies, and trends may be used to trigger alerts and notifications to take proactive and reactive measures to maintain system uptime, performance, and security.

The data monitored and alerts generated may identify when the domain application (702) should utilize a different platform configuration tier. For example, if the domain application (702) utilizes client side rendering, then the monitored data may identify a latency above a threshold indicating the domain application (702) is unable to keep up with demand from users. When the latency reaches the threshold, and alert may be generated suggesting to change to a platform configuration tier that utilizes server side rendering given the demand of the users of the domain application (702).

The database (750) acts as a cache for the geospatial information from the data services (711) used to render map tiles for the domain application (702). The database (750) may store geospatial data received through the pipeline (752) from the data services (711) and the domain application (702).

The pipeline (752) transfers data between the data services (711) (and the domain application (702)) and the database (750) used as a cache. The pipeline (752) may handle high volumes of data and ensure that the database (750) is up-to-date and accurate and reduce the latency in generating map tiles.

The server platform (755) manages the map servers (758), (760), and (762) and the integrated database (765). Responsive to requests from the domain application (702) through the frontend component (735), the server platform (755) provisions domain accounts on and passes rendering requests to the map servers (758), (760), and (762).

The map servers (758), (760), and (762) render map tiles as requested by the domain application photo to through the frontend component (735). The map tiles rendered by the map servers (758) through (762) use geospatial data that may be transferred using the pipeline (752), received from the database (750), and received from the integrated database (765).

The integrated database (765) is another database that acts as a cache. The integrated database (765) may be integrated with the map servers (758) through (762) to reduce the latency in generating map tiles.

Turning to FIG. 8, the domain application (802) of the system (800) incorporates the frontend component (835) utilizing a platform configuration tier (*e.g.,* a first platform configuration tier) that specifies client side rendering without using the database (850) as a cache. The platform configuration tier used by the domain application (802) may be for scenarios utilizing resource usage less than that of the domain application (902) of FIG. 9. As an example, the domain application (802) may present map tiles for about 10,000 points. Each point may correspond to a well location. The domain application (802) utilizes the management system (838) to authorize the use of the frontend component (835). Data for the map tiles may be managed by the domain application (802) and from the sources (808), (810), (815), and (818). The map tiles are rendered and displayed on a client device accessing the domain application (802).

Turning to FIG. 9, the domain application (902) of the system (900) incorporates the frontend component (935) utilizing another platform configuration tier (*e.g.,* a third platform configuration tier) that specifies client side rendering and using the database (950) as a cache. The platform configuration tier used by the domain application (902) may be for scenarios utilizing resource usage greater than that of the domain application (802) of FIG. 8 and less than that of the domain application (1002) of FIG. 10. As an example, the domain application (902) may present map tiles for about 30,000 points. Each point may correspond to a well location. The domain application (902) utilizes the management system (938) to authorize the use of the frontend component (935). Data for the map tiles may be managed through the pipeline (952) and from the sources (908), (910), (915), and (918) and may support data entitlements. The map tiles are rendered and displayed on a client device accessing the domain application (902).

Turning to FIG. 10, the domain application (1002) of the system (1000) incorporates the frontend component (1035) utilizing another platform configuration tier (*e.g.,* a second platform configuration tier) that specifies server side rendering and using the database (1050) as a cache. The platform configuration tier used by the domain application (1002) may be for scenarios utilizing resource usage greater than that of the domain application (902) of FIG. 9 and less than that of the domain application (1202) of FIG. 12. As an example, the domain application (1002) may present map tiles for about 100,000 points. Each point may correspond to a well location. The domain application (1002) utilizes the management system (1038) to authorize the use of the frontend component (1035). Data for the map tiles may be managed through the pipeline (1052) and from the sources (1008), (1010), (1015), and (1018) and may support data entitlements. The map tiles are rendered on one or more of the map servers (1058), (1060), and (1062) and displayed on a client device accessing the domain application (1002).

Turning to FIG. 11, the domain application (1102) of the system (1100) incorporates the frontend component (1135) utilizing another platform configuration tier (*e.g.,* a fourth platform configuration tier) that specifies server side rendering without using a database as a cache. The platform configuration tier used by the domain application (1102) may be for scenarios utilizing resource usage greater than that of the domain application (902) of FIG. 9 and less than that of the domain application (1202) of FIG. 12. As an example, the domain application (1102) may present map tiles for about 80,000 points. Each point may correspond to a well location. The domain application (1102) utilizes the management system (1138) to authorize the use of the frontend component (1135). Data for the map tiles may be managed through the domain application (1102) and from the source (1115) and may support data entitlements. The map tiles are rendered on one or more of the map servers (1158), (1160), and (1162) and displayed on a client device accessing the domain application (1102).

Turning to FIG. 12, the domain application (1202) of the system (1200) incorporates the frontend component (1235) utilizing another platform configuration tier (*e.g*., a fifth platform configuration tier) that specifies server side rendering using the integrated database (1265) without using the database (1250) as a cache. The platform configuration tier used by the domain application (1202) may be for scenarios utilizing resource usage greater than that of both the domain application (1002) of FIG. 10 and the domain application (1102) of FIG. 11. As an example, the domain application (1202) may present map tiles for 200,000 or more points. Each point may correspond to a well location. The domain application (1202) utilizes the management system (1238) to authorize the use of the frontend component (1235). Data for the map tiles may be managed through the pipeline (1252), with the integrated database (1265), from the sources (1208), (1210), (1215), and (1218), and may support data entitlements. The map tiles are rendered on one or more of the map servers (1258), (1260), and (1262) and displayed on a client device accessing the domain application (1202).

Embodiments may be implemented on a special purpose computing system specifically designed to achieve the improved technological result. Turning to FIG. 13.1 and FIG. 13.2, the special purpose computing system (1300) may include one or more computer processor(s) (1302), non-persistent storage (1304), persistent storage (1306), a communication interface (1312) (*e*.*g*., Bluetooth interface, infrared interface, network interface, optical interface, *etc.*), and numerous other elements and functionalities that implement the features and elements of the disclosure. The computer processor(s) (1302) may be an integrated circuit for processing instructions. The computer processor(s) (1302) may be one or more cores or micro-cores of a processor. The computer processor(s) (1302) includes one or more processors. The one or more processors may include a central processing unit (CPU), a graphics processing unit (GPU), a tensor processing unit (TPU), combinations thereof, *etc.*

The input device(s) (1310) may include a touchscreen, keyboard, mouse, microphone, touchpad, electronic pen, or any other type of input device. The input device(s) (1310) may receive inputs from a user that are responsive to data and messages presented by the output device(s) (1308). The inputs may include text input, audio input, video input, *etc.,* which may be processed and transmitted by the computing system (1300) in accordance with the disclosure. The communication interface (1312) may include an integrated circuit for connecting the computing system (1300) to a network (not shown) (*e.g.,* a local area network (LAN), a wide area network (WAN) such as the Internet, mobile network, or any other type of network), and/or to another device, such as another computing device.

Further, the output device(s) (1308) may include a display device, a printer, external storage, or any other output device. One or more of the output device(s) (1308) may be the same or different from the input device(s) (1310). The input device(s) (1310) and the output device(s) (1308) may be locally or remotely connected to the computer processor(s) (1302). Many different types of computing systems exist, and the aforementioned input device(s) (1310) and output device(s) (1308) may take other forms. The output devices (1308) may display data and messages that are transmitted and received by the computing system (1300). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments, which may include transmitting, receiving, presenting, and displaying data and messages described in the other figures of the disclosure.

The computing system (1300) in FIG. 13.1 may be connected to or be a part of a network. For example, as shown in FIG. 13.2, the network (1320) may include multiple nodes (*e.g.,* node X (1322), node Y (1324)). Each node may correspond to a computing system, such as the computing system (1300) shown in FIG. 13.1, or a group of nodes combined may correspond to the computing system (1300) shown in FIG. 13.1. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (1300) may be located at a remote location and connected to the other elements over a network.

The nodes (*e.g.,* node X (1322), node Y (1324)) in the network (1320) may be configured to provide services for a client device (1326), including receiving requests and transmitting responses to the client device (1326). For example, the nodes may be part of a cloud computing system. The client device (1326) may be a computing system, such as the computing system (1300) shown in FIG. 13.1. Further, the client device (1326) may include and/or perform all or a portion of one or more embodiments of the disclosure.

The computing system (1300) of FIG. 13.1 may include functionality to present raw and/or processed data, such as results of comparisons and other processing. For example, presenting data may be accomplished through various presenting methods. Specifically, data may be presented by being displayed in a user interface, transmitted to a different computing system, and stored. The user interface may include a GUI that displays information on a display device. The GUI may include various GUI widgets that organize what data is shown as well as how data is presented to a user. Furthermore, the GUI may present data directly to the user, *e.g*., data presented as actual data values through text, or rendered by the computing device into a visual representation of the data, such as through visualizing a data model.

As used herein, the term "connected to" contemplates multiple meanings. A connection may be direct or indirect (*e*.*g*., through another component or network). A connection may be wired or wireless. A connection may be a temporary, permanent, or a semi-permanent communication channel between two entities.

The various descriptions of the figures may be combined and may include or be included within the features described in the other figures of the application. The various elements, systems, components, and steps shown in the figures may be omitted, repeated, combined, and/or altered as shown from the figures. Accordingly, the scope of the present disclosure should not be considered limited to the specific arrangements shown in the figures.

In the application, ordinal numbers (*e.g.,* first, second, third, *etc*.) may be used as an adjective for an element (*i.e.,* any noun in the application). The use of ordinal numbers is not to imply or create any particular ordering of the elements, nor to limit any element to being a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, unless expressly stated otherwise, "or" is an inclusive "or" and, as such includes "and". Further, items joined by an "or" may include any combination of the items with any number of each item unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above may be devised which do not depart from the scope of the claims as disclosed herein. Accordingly, the scope should be limited only by the attached claims.

## Claims

1. A method comprising:
provisioning a domain account, corresponding to a domain application, as one of a set of domain accounts to a map server to process a set of domain application requests from a set of domain applications comprising the domain application;
controlling access to the domain accounts based on a user role configuration;
mapping a domain application request from the domain application to the domain account on the map server based on a user role configuration; and
securing access to a data partition within the domain account using a data partition entitlement for the request.

2. The method of claim 1, further comprising:
receiving the domain application request from the domain application for a map tile corresponding to geospatial data; and
transmitting a geospatial service response comprising a map tile from the map server of a map service to the domain application, wherein the map tile is displayed by the domain application.

3. The method of claim 1 or 2, further comprising:
provisioning a map server of a map service to a region to host a set of domain accounts comprising a domain account; and
receiving the domain application request within a set of domain application requests from a set of instances of the domain application to access the domain account.

4. The method of any one of the preceding claims, further comprising:
applying a map service by transmitting the geospatial service request to a map server of the map service, wherein the map server hosts multitenant data with a set of domain accounts corresponding to a set of data partitions, wherein the set of domain accounts comprises a domain account corresponding to the domain application.

5. The method of any one of the preceding claims, further comprising:
applying a map service by transmitting the geospatial service request to a map server of the map service, wherein the map server hosts multitenant data with a set of domain accounts corresponding to a set of data partitions, wherein the set of domain accounts comprises a domain account corresponding to a data partition of the set of data partitions.

6. The method of any one of the preceding claims, wherein provisioning the domain account further comprises:
validating credentials from the domain application; and
creating the domain account on the map server.

7. The method of any one of the preceding claims, wherein controlling access to the domain accounts further comprises:
determining that a user is authorized to access the domain account based on the user role configuration.

8. The method of any one of the preceding claims, wherein mapping the domain application request further comprises:
retrieving the user role configuration; and
executing a mapping algorithm to map the domain application request to the map server.

9. The method of any one of the preceding claims, wherein mapping the domain application request further comprises:
receiving the domain application request from a geospatial interface element incorporated into the domain application, wherein the geospatial interface element executes on a browser on a user device.

10. The method of any one of the preceding claims, wherein securing access to the data partition further comprises:
retrieving the data partition entitlement corresponding to the domain account; and
authorizing access to the domain account by comparing permissions from a user role to the data partition entitlement.

11. A system comprising:
at least one processor; and
an application that, when executing on the at least one processor, performs a method according to any one of the preceding claims.

12. A non-transitory computer readable medium comprising instructions executable by at least one processor to perform a method according to any one of the claims 1 - 10.
